# DEMANDE DE BREVET EUROPEEN

(11) **EP 2 879 352 A1**
(43) Date de publication de la demande: **03.06.2015**
(21) Numéro de dépôt: 14193322.6
(22) Date de dépôt: 14.11.2014
(51) Int. Cl.: H04L 29/08

(54) **Contrôle de la diffusion de contenus multimedia**

(30) Priorité: 29.11.2013 FR 1361891
(71) Demandeur: Orange, 75015 Paris (FR)
(72) Inventeur: Duvivier, Philippe, 35133 ROMAGNE (FR); Marchand, Hervé, 35770 VERN SUR SEICHE (FR); Rivoalen, Mathieu, 22300 LANNION (FR)

(57) **Abrégé**

L'invention concerne un procédé de gestion de contenus multimédia (C1, C2) aptes à être restitués par au moins un terminal (2-4) connecté à une passerelle de service (6).

Les contenus sont aptes à être transcodés selon plusieurs niveaux (N1...N10).

Le procédé est caractérisé en ce qu'il comprend les étapes de :
- réception (E13, E14) d'une requête en provenance d'un terminal pour un contenu multimédia (C1@N2, C2@N5) dans un niveau initial (N2, N5) ;
- établissement (E11, E12) d'au moins une caractéristique liée au terminal ;
- calcul (E15, E16) d'un niveau cible (C1@R2, C2@R5) pour le contenu multimédia à délivrer au terminal (3,4). en fonction de la caractéristique établie.

## Description

### Domaine technique

L'invention se rapporte aux communications de contenus multimédia. On entend par contenu multimédia tout contenu audio ou vidéo, ou plus généralement tout autre contenu numérique.

L'invention concerne plus spécifiquement la préparation, la transmission et la réception de contenus vidéo sur un réseau, en particulier le téléchargement continu, aussi appelé *streaming,* de contenus multimédia sur un réseau à partir de terminaux clients (dans la suite appelés simplement *terminaux*) capables d'accéder à un tel contenu.

### Etat de la technique

Pour accéder à un contenu multimédia sur un réseau de type Internet, ou de manière similaire sur un réseau local, c'est-à-dire un réseau qui relie ensemble, avec ou sans fils, les équipements terminaux d'une maison ou d'une entreprise (ordinateurs, périphériques d'impression, de stockage, etc.), un terminal client effectue généralement une requête de la manière suivante : une première étape consiste à télécharger sur un premier serveur un document décrivant les paramètres d'accès au service via le protocole HTTP (de l'anglais *Hyper Text Transport Protocol*), un protocole de communication client-serveur développé pour les réseaux Internet et en particulier le Web. Ce document peut être un fichier informatique ou un ensemble d'informations descriptives du contenu accessible à une certaine adresse sur un second serveur, dit serveur de contenus. Dans la suite, on y référera sous l'expression « fichier de description ». Lors d'une seconde étape, le terminal client accède au contenu sur le second serveur et le service démarre effectivement, c'est-à-dire que le terminal client peut recevoir et consommer le contenu.

Il est fréquent, dans ce contexte du protocole HTTP, de recourir, pour échanger les données entre le terminal client et le serveur, à une technique de type dit « streaming adaptatif » (HAS pour « HTTP Adaptive Streaming »). Ce type de technique permet notamment d'offrir une bonne expérience à l'utilisateur tout en tenant compte, par exemple, des variations de bande passante sur la liaison entre le terminal client et le serveur de contenus. Classiquement, différents flux sont encodés, ou transcodés, pour le même contenu multimédia, par exemple une vidéo numérique, correspondant à différents débits, différentes résolutions, différentes qualités. Dans la suite, on se référera au « niveau » d'un flux multimédia pour désigner une certaine qualité et/ou débit et/ou résolution spatiale ou temporelle du contenu, notamment mais non exclusivement vidéo.

Le codage d'une vidéo a pour but de fournir une représentation du contenu initial de la vidéo conforme à certains paramètres (débit moyen, débit instantané, norme de codage-décodage utilisée, résolution spatiale, fréquentielle, etc.) sous une forme généralement plus compacte. Le transcodage consiste à ré-encoder une vidéo déjà encodée, avec de nouveaux paramètres. Chaque niveau est lui-même découpé en segments temporels, aussi appelés « fragments » (ou « *chunks* » en anglais) correspondant généralement à quelques secondes de contenu. Ces différents niveaux et la segmentation associée sont généralement décrits dans le fichier de description.

Il existe plusieurs solutions pour faciliter la mise à disposition et distribution d'un tel contenu en *streaming,* comme par exemple les solutions propriétaires *Microsoft Smooth Streaming* et *Apple HTTP Live Streaming* (HLS), ou encore la norme MPEG DASH (pour *Dynamic Adaptive Streaming over HTTP*
- ISO/IEC 23009-1:2012(E)), une norme de l'organisme ISO/IEC dédiée au *streaming* de contenus multimédia sur Internet. Cette dernière norme permet notamment à des périphériques connectés au réseau (TV, tablettes, etc.) de consommer des contenus multimédia via le protocole HTTP. Dans le cas de MPEG DASH, l'accès au contenu se fait traditionnellement selon deux étapes :
   1) Obtention d'un document de description, typiquement via le téléchargement, au travers d'une adresse HTTP, d'un fichier contenant notamment les adresses des fragments de média du contenu multimédia (par exemple fichier d'extension « .mpd » pour *Media Présentation Description*).
   2) Obtention des fragments de média, typiquement via un téléchargement, à l'aide des adresses contenues dans le document de description.

Ainsi le terminal client choisit-il les différents fragments qui lui sont proposés dans le fichier de description en fonction de certains critères, comme ses capacités de décodage, la taille de son écran, la bande passante disponible, le format de codage vidéo le plus adapté, etc. Pour adapter ce choix au cours du temps, selon la variation de tels critères (par exemple l'évolution de la bande passante), le niveau des fragments peut évoluer dynamiquement tout au long de la lecture de la vidéo.

Dans la suite, on considère que le terminal client est connecté à une *passerelle de service,* c'est à dire un équipement du réseau capable de lui fournir, directement ou indirectement, l'accès aux contenus. Ce type d'équipement peut aussi s'appeler serveur de contenus multimédia, ou plateforme de services, passerelle domestique, passerelle de réseau local d'entreprise, etc.

Quand un contenu vidéo, dit contenu initial, arrive à la passerelle de service, il est transcodé en autant de niveaux qu'il y a de différents débits/qualités/résolutions proposés dans le fichier de description. La passerelle de service stocke ou fait stocker des fragments des niveaux transcodés.

Dans ce contexte, il est cependant fréquent que le client n'obtienne qu'un flux dégradé, c'est-à-dire en-dessous du niveau idéal qui lui conviendrait.

Typiquement, le client détermine la bande passante disponible.

Or, il peut exister un goulot d'étranglement sur le réseau entre le serveur et le terminal client : par exemple le débit de la liaison peut être limité à un certain endroit du réseau. Il se peut aussi que plusieurs terminaux clients entrent en concurrence : par exemple, si deux terminaux clients appartenant au même réseau local demandent au même moment des flux vidéo dont les débits cumulés dépassent la capacité du réseau, c'est le terminal client qui demande le plus de débit qui va s'attribuer une part de débit plus importante au détriment du terminal client moins revendicatif.

Le choix du niveau effectué par le terminal client porte sur une valeur disponible dans le fichier de description, inférieure ou égale à la bande passante calculée. Cette valeur peut donc être plus ou moins éloignée de la valeur idéale théorique, optimale, qui conviendrait aux caractéristiques du terminal client.

L'invention offre une solution ne présentant pas les inconvénients de l'état de la technique.

### L'invention

A cet effet, selon un aspect fonctionnel, l'invention a pour objet un procédé de gestion de contenus multimédia aptes à être restitués par au moins un terminal connecté à une passerelle de service, lesdits contenus étant aptes à être transcodés selon plusieurs niveaux, ledit procédé étant caractérisé en ce qu'il comprend les étapes de :
- réception d'une requête en provenance d'un terminal pour un contenu multimédia dans un niveau initial ;
- établissement d'au moins une caractéristique liée au terminal ;
- calcul d'un niveau cible pour le contenu multimédia à délivrer au terminal, en fonction de la caractéristique établie.

Il est ainsi possible, selon l'invention, d'optimiser globalement la qualité des flux multimédia reçus pour un ou plusieurs terminaux d'utilisateurs du réseau local. Grâce à l'analyse du réseau et du parc de terminaux selon l'invention, qui permet de connaître les caractéristiques s'appliquant à chacun des terminaux du réseau (débit, résolution, type de client sur le terminal, etc.), le système est capable de calculer au mieux le débit à attribuer pour chaque flux multimédia et chaque terminal, pour une optimisation globale des différents terminaux des utilisateurs du réseau. Ainsi, ce n'est plus le terminal, et donc indirectement le constructeur du terminal, qui choisit le niveau à recevoir, au détriment éventuel des autres terminaux, mais le gestionnaire de réseau local qui répartit au mieux les ressources en fonction des requêtes reçues et des capacités effectives du réseau local.

Selon un mode de mise en oeuvre particulier de l'invention, un procédé tel que décrit ci-dessus est en outre caractérisé en ce que la caractéristique établie est relative au débit utile pour le terminal.

Selon ce mode de réalisation, le procédé selon l'invention détermine en temps réel le débit disponible au niveau de chacun des terminaux. Ceci permet notamment de savoir si un terminal ou un groupe de terminaux est limité par des goulots d'étranglement. Dans ce cas en effet, le débit effectivement souhaitable pour l'utilisateur n'est pas forcément celui qui a été demandé et le procédé selon l'invention ajuste au mieux le débit délivré au goulot d'étranglement, de manière à répartir au mieux la bande passante disponible.

De même, lors de la lecture simultanée de plusieurs flux multimédia, par exemple vidéo, sur un même segment du réseau local, les différents terminaux entrent en concurrence pour le partage des ressources du réseau, notamment de la bande passante, ou débit. La concurrence se base sur un comportement individuel de chaque client, menant à une répartition inégale des ressources et la dégradation très importante de certains flux multimédia. L'arbitrage de la bande passante par le procédé selon l'invention permet une optimisation globale maitrisée de la qualité des différentes vidéos en répartissant le débit selon certaines règles à utiliser lors d'un conflit : assurer que chaque terminal bénéficie d'un certain pourcentage du débit requis, d'une résolution minimale, etc.

Selon un second mode de mise en oeuvre particulier de l'invention, qui pourra être mise en oeuvre alternativement ou cumulativement avec le précédent, un tel procédé est en outre caractérisé en ce que la caractéristique établie comporte une priorité pour le terminal.

Ce mode de mise en oeuvre de l'invention permet d'associer une priorité à certains terminaux afin de mieux servir ceux dont la priorité est la plus élevée, par exemple le téléviseur peut être jugé prioritaire aux dépens du *Smartphone* d'un utilisateur. La priorité peut être déterminée en fonction de certains critères comme la taille de l'écran du terminal, ou l'appartenance à une certaine classe de service ou encore la liaison à une offre privilégiée de l'opérateur de service, etc.

Selon un troisième mode de mise en oeuvre particulier de l'invention, qui pourra être mise en oeuvre alternativement ou cumulativement avec les précédents, un tel procédé est en outre caractérisé en ce que le niveau cible et le niveau initial sont décrits dans un fichier de description du contenu numérique.

Ce mode de mise en oeuvre de l'invention permet de décrire simplement un très grand nombre de nivaux initiaux et autorise une compatibilité avec la norme MPEG-DASH si le fichier est un fichier « manifeste » selon cette norme, ou avec toute autre norme précédemment citée utilisant un fichier de description. Avantageusement, le niveau cible se trouvant dans le fichier de description, le terminal peut plus facilement le recevoir et le traiter puisqu'il correspond à un jeu de débits/résolutions standard.

Selon un aspect matériel, l'invention concerne également un dispositif de gestion de contenus multimédia aptes à être restitués par au moins un terminal connecté à une passerelle de service, lesdits contenus étant apte à être transcodés selon plusieurs niveaux, ledit procédé étant caractérisé en ce qu'il comprend :
- un module de réception d'une requête en provenance d'un terminal pour un contenu multimédia dans un niveau initial ;
- un module d'établissement d'au moins une caractéristique liée au terminal ;
- un module de calcul d'un niveau cible pour le contenu multimédia à délivrer au terminal, en fonction de la caractéristique établie.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

Selon un autre aspect matériel, l'invention concerne également une passerelle de service comportant un dispositif de gestion de contenus multimédia tel que revendiqué ci-dessus.

Selon un autre aspect matériel, l'invention concerne également un programme d'ordinateur comportant des instructions de code pour la mise en oeuvre d'un procédé de gestion de contenus multimédia tel que décrit ci-dessus, lorsque celle-ci est exécutée par un processeur.

Selon encore un autre aspect matériel, l'invention a trait à un support d'enregistrement lisible par un processeur de données sur lequel est enregistré un programme comprenant des instructions de code de programme pour l'exécution des étapes du procédé défini ci-dessus.

Les objets selon les aspects matériels de l'invention procurent au moins les mêmes avantages que ceux procurés par les procédés selon l'aspect fonctionnel.

L'invention sera mieux comprise à la lecture de la description qui suit, donnée à titre d'exemple et faite en référence aux dessins annexés.

### Les figures:

La figure 1 représente une architecture de *streaming* dans un réseau local selon l'état de l'art.
La figure 2 représente une architecture d'une passerelle de service implémentant un mode de réalisation de l'invention.
La figure 3 représente un chronogramme selon un mode de réalisation de l'invention.

### Description détaillée d'un exemple de réalisation illustrant l'invention

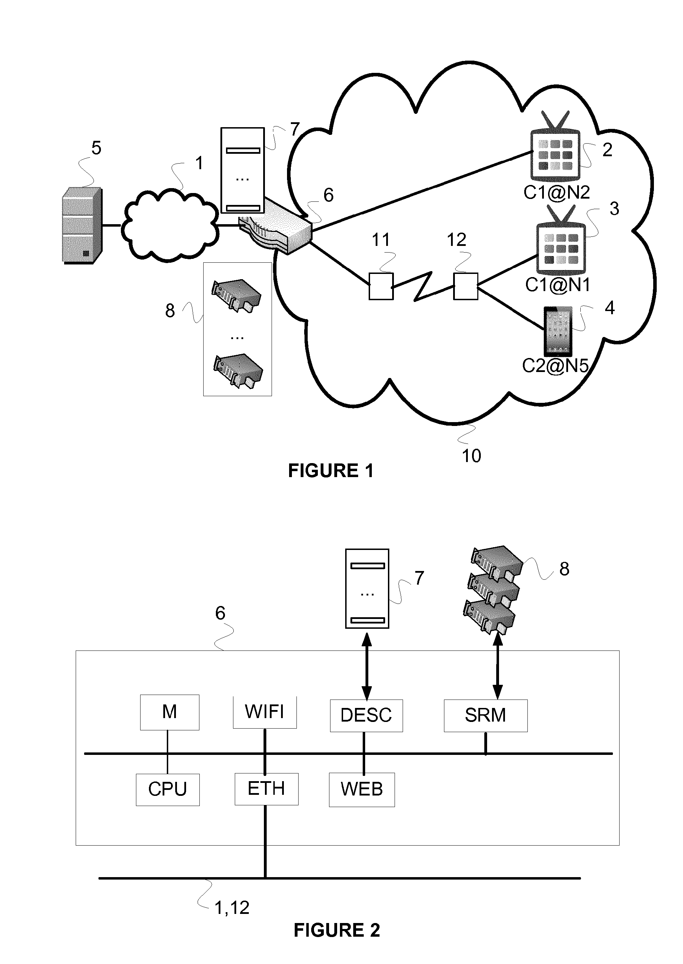

La figure 1 représente une architecture de *streaming* adaptatif basée sur l'utilisation du protocole HTTP dans un réseau local selon l'état de la technique. Le contexte du réseau local domestique est donné à titre d'exemple et pourrait être transposé aisément à celui d'un réseau d'entreprise ou d'un réseau Internet quelconque.

Classiquement, un terminal client (2-4) souhaite entrer en communication avec un serveur de contenus (5) pour télécharger un contenu multimédia composé d'un ou plusieurs médias (audio, vidéo, etc.) Les contenus sont, selon cet exemple, des contenus « Live » c'est-à-dire destinés à être délivrés en temps réel aux clients. On suppose que les terminaux (2-4) peuvent requérir le contenu C1 (Contenu 1) ou C2 (Contenu 2).

Le serveur de contenus se trouve selon cet exemple dans le réseau large bande (1) mais il pourrait, selon un autre exemple, être situé dans un réseau local d'entreprise (10), par exemple au niveau de la passerelle de service (6) ou tout autre équipement capable d'héberger un tel serveur de contenus.

Chacun des terminaux (2-4) possède ses propres caractéristiques en termes de capacité de décodage, d'affichage, etc. : résolution assez faible (N2) pour la tablette (4), intermédiaire (N5) pour le TV (3) et élevée (N8) pour le TV (2).

Le terminal peut appartenir au réseau local (1) ou se trouver plus généralement sur un réseau de données, connecté à une passerelle de services (6), par exemple un terminal en mobilité sur un réseau mobile (3G, 4G, etc.)

La passerelle de service (6) est dans cet exemple une passerelle domestique qui assure le routage des données entre le réseau large-bande (1) et le réseau local (10), gère les contenus multimédia en assurant notamment leur réception en provenance du réseau large-bande (1) ou du réseau local (10) et leur transcodage grâce aux transcodeurs (8) qui lui sont attachés. Les transcodeurs (8) peuvent typiquement se trouver dans le réseau large-bande (1), ou dans un réseau local (10), notamment au niveau de la passerelle de service.

Chaque niveau transcodé par l'un des transcodeurs (8) est stocké sur la passerelle de service (6) ou alternativement sur un autre espace de stockage accessible par la passerelle de service (6), situé dans le réseau local ou à l'extérieur.

Dans la suite de l'exemple, comme exposé ci-dessus, on se positionne dans un contexte de *streaming* adaptatif selon la norme MPEG-DASH.

Le terminal (2) interroge tout d'abord la passerelle de service (6) pour obtenir une adresse du document de description (7) du contenu multimédia (C1) souhaité. La passerelle de service (6) répond en fournissant au terminal l'adresse du fichier de description (7) du contenu C1. Dans la suite, ce document est un fichier de type *manifest* selon la norme MPEG-DASH (C1.mpd). Alternativement, ce fichier peut être récupéré directement auprès d'un serveur Internet local ou externe au réseau local, ou se trouver déjà sur la passerelle de service au moment de la requête.

Un exemple de fichier *manifest* conforme à la norme MPEG/DASH et comportant la description de dix résolutions (N1-N10) du contenu C1 fragmenté est présenté en annexe 1 : ce fichier MPD décrit les fragments du contenu correspondant à un certain niveau et permet de générer leurs adresses (URL). Dans cet exemple simplifié, cette génération est faite à l'aide des éléments « BaseURL » (« http://x.com/C1 ») et « SegmentList » qui liste les parties complémentaires des adresses des différents fragments : « C1_1s_500kb/C1_1s1.m4s» » pour le premier fragment d'une seconde de la séquence « C1 » à 500kbps au format MPEG-4 (m4s), « C1_is_500kb/contenu_1s2.m4s » pour le second fragment, etc. Le champ *duration* spécifié comme attribut de la balise « Segment List » indique la durée d'un segment en secondes. Le champ « codecs » de la représentation indique que l'on utilise un encodeur de type AVC, etc.

Ainsi, les URL d'accès aux deux premiers fragments vidéo pour le niveau N1 le plus faible, correspondant au débit le plus faible de 500 kbps sont ici :
http://x.com/ C1/ C1_1s_500kb/ C1_1s1.m4s
http://x.com/ C1/ C1_1s_500kb/ C1_1s2.m4s

Une fois qu'il dispose de ces adresses de fragments, le terminal client (2) procède à l'obtention des fragments de média via un téléchargement à ces adresses. On notera que ce téléchargement s'opère traditionnellement au travers d'une URL HTTP, mais pourrait également s'opérer au travers d'une adresse universelle (URI) décrivant un autre protocole (*dvb:*//*monsegmentdecontenuC1* par exemple).

Actuellement, un transcodage multiple accompagné d'une description adéquate permet donc d'accéder à un certain nombre de niveaux (résolutions/débits/qualités) vidéo.

Ce mécanisme ne tient cependant pas compte de l'état du réseau.

Dans l'exemple représenté sur la figure 1, les terminaux 3 et 4 d'un utilisateur (TV et *smartphone*) sont connectés à des prises à Courant Porteur en Ligne (CPL, 11 et 12). Ce type de prises peut induire une limitation de débit, par exemple au maximum 1 Mb/s (mégabit par seconde). Si le terminal 3 demande un débit de 2Mb/s il ne pourra donc être correctement servi. Si, de surcroît, le terminal 4 demande un autre contenu, ou le même contenu, il faut partager la bande passante entre les deux terminaux.

De manière générale, dans le contexte du streaming adaptatif, la bande passante est partagée de manière dynamique entre les clients. Ce partage se fait en fonction de l'algorithme de choix de qualité implémenté sur chacun des clients. Les terminaux HAS mesurent la bande passante disponible de manière permanente ou cyclique. Un client qui possède un algorithme plus « agressif » que les autres vis-à-vis de la bande passante recevra toujours une meilleure qualité, qu'il commence le premier ou non la lecture du contenu multimédia.

Dans notre exemple, l'algorithme du terminal client A (le TV 3) peut l'autoriser à utiliser 60% de la bande passante mesurée. L'algorithme du terminal client B, le *smartphone* (4), peut l'autoriser à utiliser 80% de la bande passante mesurée. La bande passante disponible qui doit être partagée entre les deux terminaux clients est de 1 Mb/s. Le client A démarre tout seul une lecture de contenu vidéo, il consomme 0.6 Mb/s (60% du débit). Le terminal client B lance à son tour une lecture vidéo et commence à consommer de la bande passante. Le terminal client A doit alors relâcher une partie de la bande passante qui sera tout de suite récupérée par le client B puisqu'il possède un algorithme plus revendicatif (« agressif ») vis-à-vis de la bande passante.

Selon un autre exemple, l'algorithme implémenté sur le terminal client B (le *smartphone* 4) peut l'autoriser à demander 2Mb/s. L'algorithme du client A (le TV 3) l'autorise comme précédemment à utiliser 60% de la bande passante mesurée. Dans ce cas le client B reçoit 1 Mb/s (maximum de la bande passante) et A ne reçoit rien.

Dans l'art antérieur, la gestion de la bande passante est donc entièrement laissée à l'initiative des terminaux clients. Dans un cas extrême, on a vu qu'un terminal client peut même, en demandant un contenu de trop haute qualité, empêcher les autres clients d'accéder à leur contenu. L'algorithme de sélection de la qualité vidéo implémenté sur chacun des clients est donc déterminant pour le client lui-même mais aussi pour les autres clients qui partagent la ressource réseau, ici la bande passante.

La figure 2 représente l'architecture d'un équipement qui implémente un mode de réalisation de l'invention, comme par exemple la passerelle de service (6) de la figure 1 comportant entre autres le module gestionnaire SRM (*Streaming Rate Manager*) en charge du streaming adaptatif selon l'invention.

L'équipement comprend, classiquement, des mémoires (M) associées à un processeur (CPU). Les mémoires peuvent être de type ROM (de l'anglais *Read Only Memory*) ou RAM (de l'anglais *Random Access Memory*) ou encore Flash. La passerelle (6) communique avec le réseau local et le réseau large bande (12) via le module Ethernet (ETH) d'une part et éventuellement le module WIFI pour une communication locale sans fils. Il met à disposition un site Web sur lequel les terminaux clients viennent se connecter et chercher les fichiers de description (7).

La passerelle de service (6) comprend en outre, conformément à l'invention, un module de gestion du streaming, SRM, et un ensemble de transcodeurs (8). Le module SRM, qui peut être logiciel et/ou matériel, est notamment capable de calculer le débit à fournir pour chaque couple de terminal/contenu de manière dynamique en fonction des demandes des clients, et de piloter le ou les transcodeur(s) (8).

La passerelle de service (6) selon l'invention peut aussi contenir un disque dur pour le stockage des fragments vidéo, et éventuellement d'autres modules, comme par exemple un module de contrôle d'accès, un module d'interface vidéo, etc.

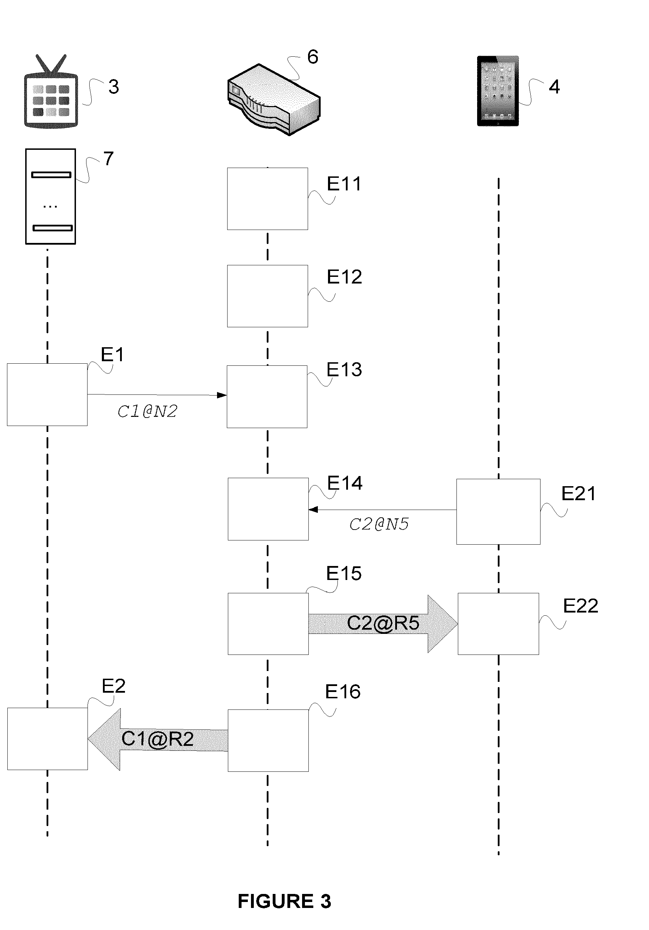

La figure 3 décrit les différentes étapes de streaming selon l'invention sous forme de chronogramme.

Les terminaux 4 (*smartphone*) et 3 (TV) représentés en haut de la figure accèdent tous deux à la passerelle 6 pour une demande de contenu.

Selon notre exemple (figure 1) ils partagent tous les deux le même segment de réseau et doivent dont partager le débit disponible en amont qui se trouve limité par le débit entre les prises CPL.

Lors d'une étape d'initialisation E11, le module de gestion du streaming (SRM), installé dans cet exemple sur la passerelle de services (6) récupère la topologie du réseau domestique et détecte les capacités réellement disponibles sur les différents segments du réseau local dont elle a la charge. Cette opération peut être cyclique (par exemple, toutes les 5 secondes).

Cette opération de récupération de la topologie du réseau et notamment de valeurs relatives à la bande passante totale et à son taux d'utilisation peut par exemple être menée en utilisant le protocole de la norme IEEE 1905. Cette norme, publiée début 2013, de référence *IEEE STANDARD 1905.1-2013 - IEEE Standard for a Convergent Digital Home Network for Heterogeneous Technologies,* également connue sous le nom de « nVoy », permet entre autres d'obtenir ce type d'informations.

De telles informations de topologie permettent de déterminer quels sont les segments du réseau partagés par les terminaux clients (par exemple le lien CPL 11-12 de notre exemple de la figure 1) ainsi que la valeur de la ressource réseau (la bande passante) disponible sur ce lien.

On peut alors déterminer lors d'une étape E12, pour chacun des terminaux clients, la bande passante qui peut lui être allouée. Le module SRM calcule un débit nominal pour chacun des flux vidéo afin d'optimiser la qualité globale. Selon cet exemple, comme les deux terminaux 3 et 4 partagent le même débit, le module SRM assure une répartition « équitable » entre les deux. Par exemple si la bande passante est de 1 Mb/s au total, un calcul raisonnable peut être d'accorder un pourcentage élevé de ce débit (e.g. 70%) au téléviseur 4 et un pourcentage faible au *smartphone* (e.g. 20%).

Les deux terminaux émettent respectivement une requête de contenu lors des étapes E1 et E21 : le contenu 1 au niveau N2 (C1@N2) pour le TV (3) et le contenu 2 au niveau N5 (C2@N5) pour le *smartphone* (4).

Lors des étapes E13, E14 suivantes, la passerelle reçoit et traite les deux requêtes des deux terminaux.

Puis lors des étapes E15 et E16 suivantes, le module de diffusion vidéo de la passerelle règle sa diffusion sur les débits nominaux élaborés préalablement par le module SRM afin de délivrer les deux contenus avec des niveaux cible ajustés par le module SRM, éventuellement différents des niveaux demandés : par exemple, 900kb/s (R1) pour C1 et 100kb/s (R2) pour C2.

Les fragments correspondants sont éventuellement stockés sur un disque puis transmis aux terminaux clients.

Naturellement, les étapes précédentes peuvent être inversées, c'est-à-dire que les calculs du module de gestion peuvent être effectués après les réceptions des requêtes clients.

Le transcodeur contrôlé par le module de gestion du *streaming* (SRM) continue ainsi à générer les fragments de manière dynamique en respectant les phases de pause et d'asservissement jusqu'à la fin de la lecture du contenu vidéo, qui peut être visualisé par les terminaux clients au cours d'étapes non représentées.

L'opération de transcodage décrite dans cet exemple à titre d'illustration reste facultative. Par exemple, la génération des fragments peut résulter d'une simple récupération de données déjà fournies à la passerelle de service (6) par le serveur (5) si celui-ci est de type « HAS ».

Lors d'une nouvelle requête d'un terminal client pour un nouveau fichier de description *manifest* (7) d'un nouveau contenu, les étapes E14 et E15 (resp. E13 et E16) sont effectuées de nouveau.

Les étapes E11 et E12 sont effectuées régulièrement, par exemple cycliquement, sur la passerelle de service.

Selon une variante, les flux peuvent de surcroît être affectés d'une priorité qui peut intervenir dans le calcul du niveau, ou débit alloué au terminal pour ce contenu. La priorité peut être déterminée en fonction de certains critères comme la taille de l'écran du terminal, l'appartenance à une certaine classe de service (services prioritaires, non prioritaires) ou encore la liaison à une offre privilégiée de l'opérateur de service (client « premium », client de l'opérateur à privilégier vis à vis des clients des autres opérateurs, etc.)

Il va de soi que le mode de réalisation qui a été décrit ci-dessus a été donné à titre purement indicatif et nullement limitatif, et que de nombreuses modifications peuvent y être facilement apportées par l'homme de l'art sans pour autant sortir du cadre de l'invention.

### Annexe 1 : exemple de fichier manifest MPEG-DASH pour le contenu C1

| |
|---|
| <?xml version="1.0"?> |
| <MPD |
| xmlns:xsi "http://www.w3.org/2001/XMLSchema-instance" |
| xmlns="urn:mpeg:DASH:schema:MPD:2011" |
| xsi:schemaLocation="urn:mpeg:DASH:schema:MPD:2011 DASH-MPD.xsd" |
| type="dynamic" |
| minimumUpdatePeriod="PT1.0S" |
| profiles="urn:mpeg:dash:profile:isoff-live:2011"> |
| <Representation id="0" codecs="avc1" mimeType="video/mp4" |
| width="320"height="240"startWithSAP="1"bandwidth="46986"> |
| |
| <BaseURL>http://x.com/C1</BaseURL> |
| <SegmentBase> |
| <Initialization sourceURL="C1_1s_500kbit/C1_500kbit_dash.mp4"/> |
| </SegmentBase> |
| |
| <SegmentList duration="1"> |
| <SegmentURL media="C1_1s_500kb/C1_1s1.m4s"/> |
| <SegmentURL media="C1_1s_500kb/C1_1s2.m4s"/> |
| <SegmentURL media="C1_1s_500kb/C1_1s3.m4s"/> |
| ... |
| </SegmentList> |
| |
| <SegmentList duration="1"> |
| <SegmentURL media="C1_1s_1000kb/C1_1s1.m4s"/> |
| <SegmentURL media="C1_1s_1000kb/C1_1s2.m4s"/> |
| <SegmentURL media="C1_1s_1000kb/C1_1s3.m4s"/> |
| ... |
| </SegmentList> |
| |
| <SegmentList duration="1"> |
| <SegmentURL media="C1_1s_2000kb/C1_1s1.m4s"/> |
| <SegmentURL media="C1_1s_2000kb/C1_1s2.m4s"/> |
| <SegmentURL media="C1_1s_2000kb/C1_1s3.m4s"/> |
| |
| </SegmentList> |
| |
| .... |
| |
| <SegmentList duration="1"> |
| <SegmentURL media="C1_1s_15000kb/C1_1s1.m4s"/> |
| <SegmentURL media="C1_1s_15000kb/C1_1s2.m4s"/> |
| <SegmentURL media="C1_1s_15000kb/C1_1s3.m4s"/> |
| .... |
| </SegmentList> |
| |
| </MPD> |

## Revendications

1. Procédé de gestion de contenus multimédia (C1, C2) aptes à être restitués par au moins un terminal (2-4) connecté à une passerelle de service (6), lesdits contenus étant aptes à être transcodés selon plusieurs niveaux (N1...N10), ledit procédé étant **caractérisé en ce qu'**il comprend les étapes de :
- réception (E13, E14) d'une requête en provenance d'un terminal pour un contenu multimédia (C1@N2, C2@N5) dans un niveau initial (N2, N5) ;
- établissement (E11,E12) d'au moins une caractéristique liée au terminal ;
- calcul (E15, E16) d'un niveau cible (C1@R2, C2@R5) pour le contenu multimédia à délivrer au terminal (3,4), en fonction de la caractéristique établie.

2. Procédé selon la revendication 1, **caractérisé en ce que** la caractéristique établie est relative au débit utile pour le terminal.

3. Procédé selon la revendication 1, **caractérisé en ce que** la caractéristique établie comporte une priorité pour le terminal.

4. Procédé selon la revendication 1, **caractérisé en ce que** le niveau cible et le niveau initial sont décrits dans un fichier de description (7) du contenu numérique (C1, C2).

5. Dispositif (SRM) de gestion de contenus multimédia (C1, C2) aptes à être restitués par au moins un terminal (2-4) connecté à une passerelle de service (6), lesdits contenus étant apte à être transcodés selon plusieurs niveaux (N1...N10), ledit procédé étant **caractérisé en ce qu'**il comprend :
- un module de réception (E13, E14) d'une requête en provenance d'un terminal pour un contenu multimédia (C1@N2, C2@N5) dans un niveau initial (N2, N5) ;
- un module d'établissement (E11, E12) d'au moins une caractéristique liée au terminal ;
- un module de calcul (E15, E16) d'un niveau cible (C1@R2, C2@R5), pour le contenu multimédia à délivrer au terminal, en fonction de la caractéristique établie.

6. Passerelle de service (6) comportant un dispositif de gestion de contenus multimédia selon la revendication 5.

7. Programme d'ordinateur comportant des instructions de code pour la mise en oeuvre du procédé de gestion de contenus multimédia conforme à la revendication 1, lorsque celle-ci est exécutée par un processeur.
